# EUROPÄISCHE PATENTSCHRIFT

(11) **EP 3 511 273 B1**
(45) Veröffentlichungstag und Bekanntmachung des Hinweises auf die Patenterteilung: **17.04.2024**
(21) Anmeldenummer: 19150545.2
(22) Anmeldetag: 07.01.2019
(51) Int. Cl.: B65G 59/10

(54) **ABSTAPELVORRICHTUNG FÜR SCHALEN**
DE-STACKING DEVICE FOR SHELLS
DISPOSITIF DE DESEMPILAGE DE COQUES

(30) Priorität: 11.01.2018 DE 102018100498
(43) Veröffentlichungstag der Anmeldung: 17.07.2019
(73) Patentinhaber: MULTIVAC Sepp Haggenmüller SE & Co. KG, 87787 Wolfertschwenden (DE)
(72) Erfinder: FICKLER, Bernhard, 87749 Hawangen (DE); MÖRSCHNER, Lars, 87493 Lauben (DE)
(74) Vertreter: Grünecker Patent- und Rechtsanwälte PartG mbB

(56) Entgegenhaltungen:
- WO-A1-2016/034179
- WO-A1-2018/137742

## Beschreibung

Die Erfindung bezieht sich auf eine Abstapelvorrichtung gemäß Anspruch 1 sowie auf ein Verfahren zum Betrieb einer solchen Abstapelvorrichtung.

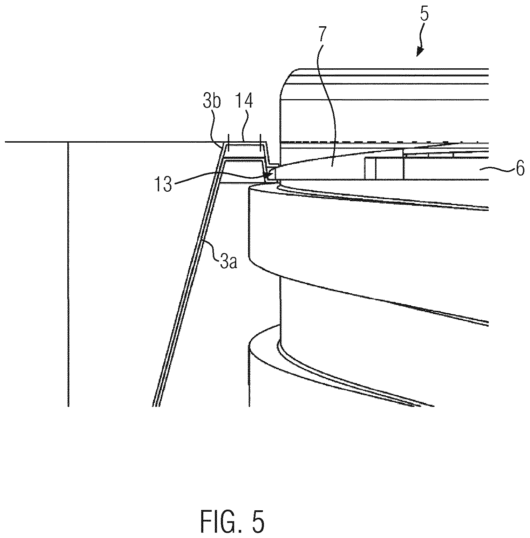

Gattungsgemäße Abstapelvorrichtungen sind aus der EP 3246277 A1 und der US 4,048,915 bekannt. Solche Abstapelvorrichtungen sind nicht geeignet, um Schalen einzeln abzustapeln, die als Schalenstapel derart ineinander gestapelt sind, dass der außen nach unten abgewinkelte Schalenrand mit der Siegelfläche des Schalenrandes der darunter befindlichen Schale überlappt (siehe Figur 5). Solche Schalen sind als Menüschalen mit Wandstärken von weniger als 300µm bekannt. Die immer in ein und dieselbe Richtung drehenden Entstaplerschrauben können nicht radial zwischen zwei aufeinander gestapelten Schalen über den Schalenrand eintauchen und dabei die Schalen prozesssicher trennen. Die WO 2016/034179 A1 beschreibt dagegen eine Abstapelvorrichtung, die es ermöglicht Schalen einzeln abzustapeln. Eine Trennsscheibe taucht in den Schalenstapel ein, dessen oberer Teil zuvor durch eine Anhebevorrichtung angehoben worden ist und in der die abgestapelte Schale dann über eine helixförmige Wendel weiter abgesenkt wird.

Eine Abstapelvorrichtung mit speziellen Entstaplerelementen zum Abstapeln von oben genannten Schalen ist aus der WO 2016/169566 A1 bekannt. Diese Entstaplerelemente rotieren nicht endlos, sondern drehen sich zum Abstapeln jeweils einer Schale um 90° bis 180° in eine erste Richtung und wieder zurück, also reversierend. Diese Entstaplerelemente weisen ein gefedertes Auflageelement und ein gefedertes Trennelement auf, wobei zwischen dem Auflageelement und dem Trennelement in Richtung der Drehachse des Entstaplerelements ein Spalt vorgesehen ist. Zu Beginn des Entstaplerprozesses liegt die unterste Schale mit ihrem nach unten abgewinkeltem Rand auf dem Auflageelement auf und durch die Drehung des Entstaplerelements drückt das Trennelement seitlich auf den abgewinkelten Rand der untersten Schale. Bei laufender Drehung und steigender Flanke des Trennelements taucht der abgewinkelte Schalenrand in den Spalt ein und bei weiterer Drehung endet das Auflageelement und die unterste Schale kann nach unten wegfallen. Das Trennelement taucht radial in Richtung der Auflage des Schalenrands und hält die nächstkommende Schale. Nachteilig daran ist, dass Schalen, die im Schalenstapel aneinander haften, evtl. auch mittels Adhäsion an den Schalenwänden, nicht prozesssicher herunterfallen, nachdem die Schale nicht mehr auf dem Auflageelement aufliegt, sowie der reversible Betrieb.

Aufgabe der Erfindung ist es, eine Abstapelvorrichtung zum kontinuierlichen Betrieb mittels Entstaplerschrauben zur Verfügung zu stellen, um obengenannte Schalenstapel zu entstapeln.

Diese Aufgabe wird gelöst durch eine Abstapelvorrichtung mit den Merkmalen des Anspruchs 1 oder durch ein Verfahren gemäß Anspruch 6. Vorteilhafte Weiterbildungen der Erfindung sind in den Unteransprüchen angegeben.

Die Erfindung bezieht sich auf eine Abstapelvorrichtung, umfassend ein Gestell zum Aufnehmen wenigstens eines Schalenstapels und umfassend mehrere Entstaplerschrauben, die dazu konfiguriert sind, kontinuierlich in jeweils einer Drehrichtung betrieben zu werden, wobei jede Entstaplerschraube eine Trennscheibe und eine helixförmig ausgebildete Wendel aufweist. Die Erfindung zeichnet sich dadurch aus, dass die Trennscheibe ein erstes Eintauchelement und ein zweites Eintauchelement aufweist, wobei das erste Eintauchelement dazu konfiguriert ist, bei Rotation der Entstaplerschraube in eine Lücke von zwei benachbarten Schalen einzutauchen, um diese zwei benachbarten Schalen auf einen größeren Abstand auseinander zu bewegen, und wobei das zweite Eintauchelement dazu konfiguriert ist, in die mittels des ersten Eintauchelements erzeugte Lücke einzutauchen. So können auch Schalen entstapelt werden, die sich sehr weit überlappen und nur eine sehr kleine Lücke an den abgewinkelten äußeren Schalenrändern haben. Bevorzugt sind dabei beide Eintauchelemente einteilig an der Trennscheibe vorgesehen, um keine Einstellmöglichkeiten der zwei Eintauchelemente zueinander vorsehen zu müssen.

Ein erfindungsgemäßes Verfahren zum Betrieb insbesondere einer zuvor beschriebenen Abstapelvorrichtung sieht vor, dass die Entstaplerschraube während ihrer Drehung mit dem ersten Eintauchelement in die Lücke zwischen unteren, also zu entstapelnden Schale und der darüber befindlichen Schale eintaucht, bis die obere Schale soweit angehoben wurde, dass zwischen der Oberseite des Schalenrands der unteren Schale und dem Schalenrand der darüber befindlichen Schale eine größere Lücke entsteht, bevor das zweite Eintauchelement in diese Lücke wenigstens teilweise über die Oberseite des Schalenrands eintaucht. So kann ein Verfahren mit hoher Prozesssicherheit bereitgestellt werden, um beispielsweise Menüschalen mit einer geringen Stabilität, mit einer großen Überlappung im Schalenstapel und mit einem sehr geringen Abstand zwischen den äußeren Schalenrändern, beispielsweise kleiner als 3 mm, entstapeln zu können.

Im Folgenden wird die Erfindung anhand von Ausführungsbeispielen näher erläuert. Im Einzelnen zeigen:
- Fig. 1: eine Schalenverschließmaschine mit einer Abstapelvorrichtung,
- Fig. 2: eine isometrische Ansicht eines Ausschnitts der Abstapelvorrichtung mit Entstaplerschraube und Schale,
- Fig. 3: eine Detailansicht einer Trennscheibe,
- Fig. 4: eine seitliche Ansicht mit Schalenstapel und Entstaplerschraube in einer ersten Stellung der Entstaplerschraube und
- Fig. 5 bis 9: weitere Stellungen der Entstaplerschraube in der Ansicht von Fig. 4.

Gleiche Komponenten sind in den Figuren durchgängig mit gleichen Bezugszeichen versehen.

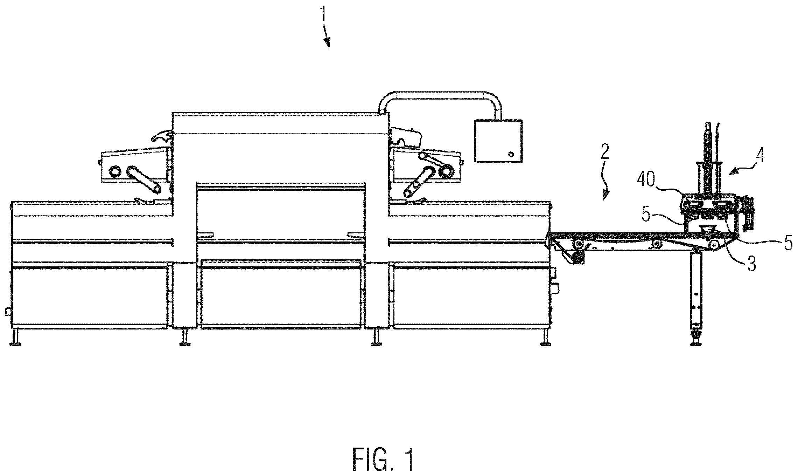

Figur 1 zeigt eine Schalenverschließmaschine 1 mit einer Transportvorrichtung 2, mittels derer Schalen 3 von einer Abstapelvorrichtung 4 aufgenommen und zur Schalenverschließmaschine 1 transportiert werden. Entlang der Transportvorrichtung 2 werden die Schalen 3 manuell oder automatisiert mit Produkten befüllt. Die Abstapelvorrichtung 4 umfasst ein Gestell 40 und mehrere Entstaplerschrauben 5.

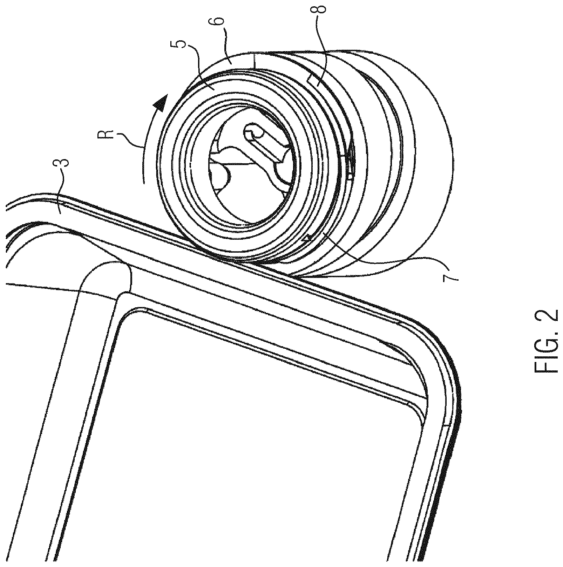

Figur 2 zeigt in einer isometrischen Darstellung einen Ausschnitt der Abstapelvorrichtung 4 mit Schalen 3 und eine Entstaplerschaube 5. Die Entstaplerschraube 5 weist eine Trennscheibe 6 mit einem ersten Eintauchelement 7 und einem zweiten Eintauchelement 8 auf. Zum Abstapeln einzelner Schalen 3 dreht sich die dargestellte Entstaplerschraube 5 im Uhrzeigersinn in der Drehrichtung R.

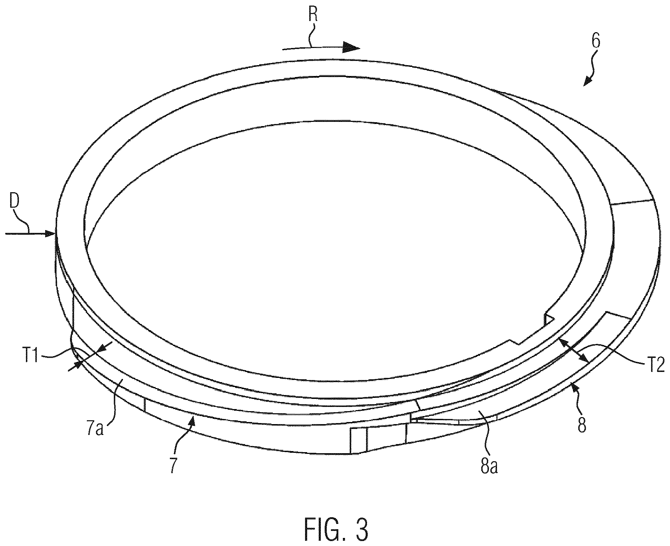

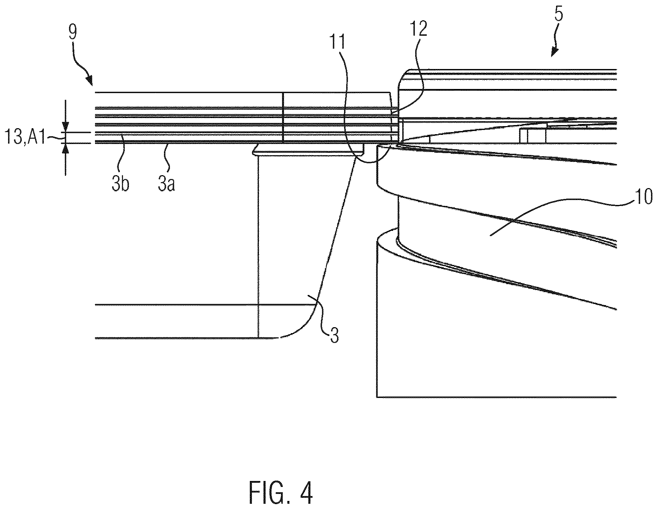

Figur 3 zeigt die Trennscheibe 6 in einer vergrößerten Einzeldarstellung. Das erste Eintauchelement 7 weist bezogen auf seine Oberseite 7a eine Steigung nach oben entgegen der Drehrichtung R auf. Das erste Eintauchelement 7 weist einen Durchmesserzuwachs gegenüber dem Außendurchmesser D einer vertikalen Wand der Trennschreibe 6 auf, der einer ersten Eintauchtiefe T1 entspricht. T1 kann einen Maximalwert von z.B. 1,5 mm bis 3,5 mm erreichen. Das zweite Eintauchelement 8 beginnt mit seiner Oberseite 8a etwas unterhalb der Oberseite 7a des ersten Eintauchelements 7. Die Oberseite 8a weist ebenso eine Steigung nach oben entgegen der Drehrichtung R auf. Das zweite Eintauchelement 8 weist einen Durchmesserzuwachs gegenüber dem Außendurchmesser D auf, der einer zweiten Eintauchtiefe T2 entspricht, die einen Wert von z.B. 4 bis 7,5 mm erreichen kann. Die Funktion der zwei Eintauchelemente 7, 8 wird in den folgenden Figuren 4 bis 9 näher beschrieben.

Figur 4 zeigt einen Schalenstapel 9 bestehend aus beispielhaft fünf Schalen 3. Zu Beginn eines Abstapelzyklusses, bei dem eine erste Schale 3a einzeln nach unten abgestapelt werden soll, liegt die erste Schale 3a und damit der Schalenstapel 9 auf einer Auflage 11 einer Wendel 10 der Entstaplerschraube 5 auf. Die über der ersten Schale 3a befindliche zweite Schale 3b weist gegenüber der ersten Schale 3a eine Lücke 13 mit einem ersten Abstand A1 von beispielsweise 2 mm zwischen den beiden Schalenrändern 12 auf.

Figur 5 zeigt eine vergrößerte Darstellung mit der ersten Schale 3a und der zweiten Schale 3b. Sie zeigt eine gedrehte Stellung der Entstaplerschraube 5, bei der die Trennscheibe 6 mit ihrem ersten Eintauchelement 7 in die Lücke 13 zwischen den Schalenrändern 12 der ersten 3a und zweiten Schale 3b eintaucht. Mit 14 ist die Siegelfläche bezeichnet, auf der später eine Deckelfolie an die Schale 3 angesiegelt werden wird.

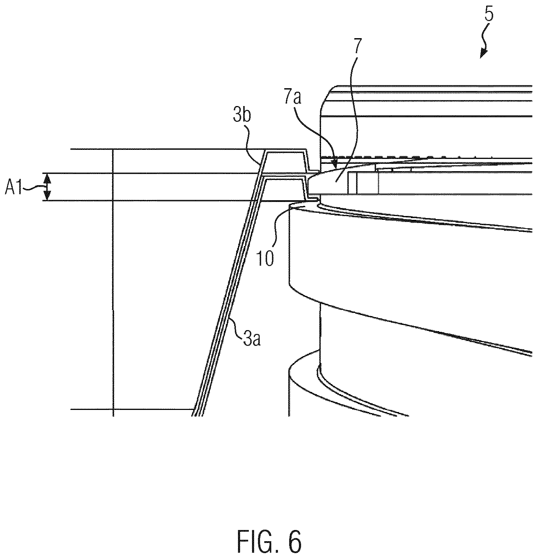

In Figur 6 wird gezeigt, wie durch die Steigung des ersten Eintauchelements 7 bei der weiterführenden Drehung der Entstaplerschraube 5 die zweite Schale 3b und die nicht näher dargestellten, darüber liegenden Schalen 3 auf der Oberseite 7a aufliegen und angehoben werden, während die erste Schale 3a mit ihrem Schalenrand 12 auf der nach unten orientierten Wendel 10 aufliegt. Dadurch vergrößert sich der Abstand A1 zwischen den Schalenrändern 12 der ersten 3a und zweiten Schale 3b in der dargestellten Stellung auf beispielsweise 5 bis 6 mm.

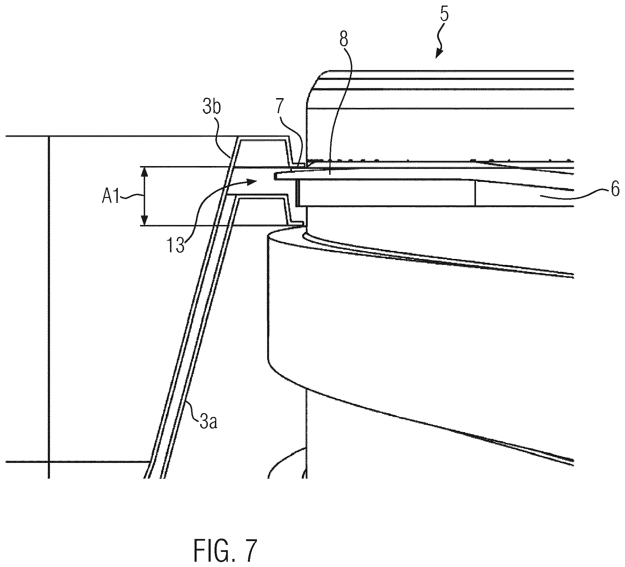

Figur 7 zeigt eine weitere Drehung der Entstaplerschraube 5, bei der das Eintauchelement 7 mit seinem Ende die zweite Schale 3b soweit angehoben hat, dass das zweite Eintauchelement 8 der Trennscheibe 6 in die auf einen Wert von beispielsweise A1 = 7,5 mm vergrößerte Lücke 13 eintaucht. Die erste Schale 3a wird währenddessen mittels der Wendel 10 weiter nach unten gefördert.

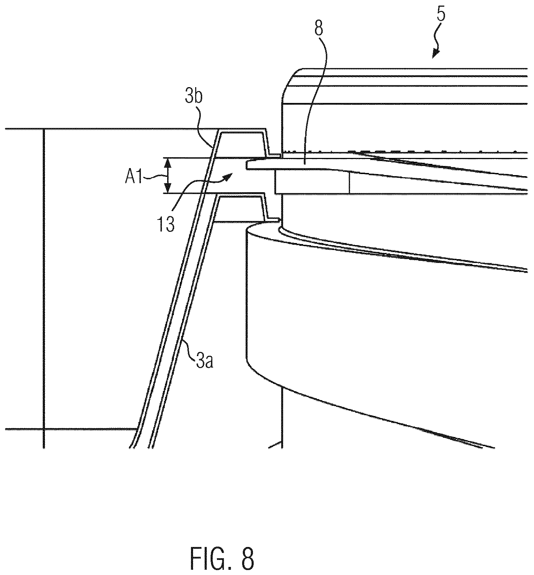

In Figur 8 hat sich der Abstand A1 der Lücke weiter vergrößert auf beispielsweise 9 mm, da die erste Schale 3a weiter nach unten befördert wird, während die zweite Schale 3b zeitgleich auf dem zweiten Eintauchelement 8 aufliegt.

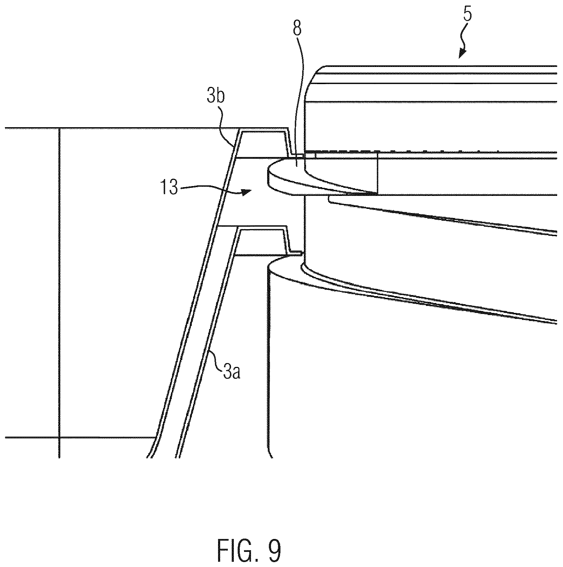

Figur 9 zeigt eine weitere Drehung der Entstaplerschraube 5, bei der die zweite Schale 3b und mit ihr der nicht näher dargestellte Schalenstapel 9 entlang einer abwärts ausgerichteten Schräge des zweiten Eintauchelements 8 auf ein oberes Startniveau bewegt wird, sodass im nachfolgenden Arbeitszyklus das erste Eintauchelement 7 wieder in die Lücke 13 der zweiten Schale 3b und der darüber befindlichen nächsten Schale 3 eintauchen kann (siehe Fig. 4).

## Patentansprüche

1. Abstapelvorrichtung (4), umfassend ein Gestell (40) zum Aufnehmen wenigstens eines Schalenstapels (9) und umfassend mehrere Entstaplerschrauben (5), die dazu konfiguriert sind, kontinuierlich in jeweils einer Drehrichtung (R) betrieben zu werden, wobei jede Entstaplerschraube (5) eine Trennscheibe (6) und eine helixförmig ausgebildete Wendel (10) aufweist, wobei die Trennscheibe (6) ein erstes Eintauchelement (7) und ein zweites Eintauchelement (8) aufweist, wobei das erste Eintauchelement (7) dazu konfiguriert ist, bei Rotation der Entstaplerschraube (5) in eine Lücke (13) zwischen zwei benachbarten Schalen (3) einzutauchen, um einen Abstand (A1) zwischen den zwei benachbarten Schalen (3) um wenigstens 2 mm zu vergrößern, wobei das zweite Eintauchelement (8) dazu konfiguriert ist, in die mittels des ersten Eintauchelements (7) vergrößerte Lücke (13) einzutauchen, wobei das erste Eintauchelement (7) eine entgegen der Drehrichtung (R) der Entstaplerschraube (5) ansteigende Oberseite (7a) aufweist, und wobei eine Oberseite (8a) des zweiten Eintauchelements (8) eine Steigung nach oben entgegen der Drehrichtung (R) der Entstaplerschraube (5) aufweist.

2. Abstapelvorrichtung nach Anspruch 1, **dadurch gekennzeichnet, dass** beide Eintauchelemente (7, 8) einteilig an der Trennscheibe (6) vorgesehen sind.

3. Abstapelvorrichtung nach einem der vorangehenden Ansprüche, **dadurch gekennzeichnet, dass** das zweite Eintauchelement (8) horizontal weiter von einer vertikalen Wand der Trennschreibe (6) vorsteht als das erste Eintauchelement (7).

4. Abstapelvorrichtung nach einem der vorangehenden Ansprüche, **dadurch gekennzeichnet, dass** das erste Eintauchelement (7) eine erste Eintauchtiefe (T1) von 1,5 mm bis 3,5 mm aufweist und/oder dass das zweite Eintauchelement (8) eine zweite Eintauchtiefe (T2) von 4 mm bis 7,5 mm aufweist.

5. Abstapelvorrichtung nach einem der vorangehenden Ansprüche, **dadurch gekennzeichnet, dass** das zweite Eintauchelement (8) mit seiner Oberseite (8a) etwas unterhalb eines oberen Endes der Oberseite (7a) des ersten Eintauchelements (7) beginnt.

6. Verfahren zum Betrieb einer Abstapelvorrichtung (4) für Schalen (3), wobei die Abstapelvorrichtung (4) ein Gestell (40) zum Aufnehmen wenigstens eines Schalenstapels (9) sowie mehrere Entstaplerschrauben (5) aufweist, wobei die Entstaplerschrauben (5) jeweils eine Trennscheibe (6) und eine helixförmig ausgebildete Wendel (10) aufweisen, wobei ferner die Trennscheibe (6) ein erstes Eintauchelement (7) und ein zweites Eintauchelement (8) aufweist, und
wobei das Verfahren das kontinuierliche Drehen der Entstaplerschrauben (5) jeweils in einer Drehrichtung (R) umfasst, wobei das erste Eintauchelement (7) eine entgegen der Drehrichtung (R) der Entstaplerschraube (5) ansteigende Oberseite (7a) aufweist, und wobei eine Oberseite (8a) des zweiten Eintauchelements (8) eine Steigung nach oben entgegen der Drehrichtung (R) der Entstaplerschraube (5) aufweist, und
wobei das Verfahren folgende Verfahrensschritte umfasst:
- Eintauchen der Entstaplerschraube (5) während ihrer Drehung in der Drehrichtung (R) mit dem ersten Eintauchelement (7) in eine Lücke (13) zwischen einer untersten, zu entstapelnden Schale (3) und einer darüber befindlichen Schale (3b),
- Anheben der darüber befindlichen Schale (3b) mittels der Oberseite (7a) des ersten Eintauchelements (7) bei weiterer Drehung der Entstaplerschraube (5),
- Vergrößern der Lücke (13) durch das Anheben der über der zu entstapelnden Schale (3a) befindlichen Schale (3b),
- Eintauchen in die vergrößerte Lücke (13) zwischen der zu entstapelnden Schale (3a) und der darüber befindlichen Schale (3b) mittels des zweiten Eintauchelements (8) und
- Absenken der zu entstapelnden Schale (3a) auf der helixförmig ausgebildeten Wendel (10), während die über der zu entstapelnden Schale (3a) befindliche Schale (3b) auf dem zweiten Eintauchelement (8) gehalten bleibt.

7. Verfahren nach Anspruch 6, **dadurch gekennzeichnet, dass** die vertikale Abmessung (A1) der Lücke (13) ausgehend von einem Ausgangswert um mindestens 50% oder um mindestens 100% vergrößert wird.

8. Verfahren nach einem der Ansprüche 6 oder 7, **dadurch gekennzeichnet, dass** die vertikale Abmessung (A1) der Lücke (13) von einem Ausgangswert im Bereich von 1,5 bis 3 mm auf 7 bis 14 mm vergrößert wird.

9. Verfahren nach einem der Ansprüche 6 bis 8, **dadurch gekennzeichnet, dass** das zweite Eintauchelement (8) in horizontaler Richtung weiter in die Lücke (13) eintaucht als das erste Eintauchelement (7).

## Claims

1. A destacker (4) comprising a rack (40) for accommodating at least one stack of trays (9) and further comprising a plurality of destacking screws (5) configured to be operated continuously in a respective direction of rotation (R), each destacking screw (5) having a separating disk (6) and a helically configured spiral (10), wherein the separating disk (6) comprises a first insertion element (7) and a second insertion element (8), the first insertion element (7) being configured to enter a gap (13) between two neighboring trays (3) during rotation of the destacking screw (5) so as to increase a distance (A1) between two neighboring trays (3) by at least 2 mm, and the second insertion element (8) being configured to enter the gap (13) that has been enlarged by means of the first insertion element (7),
wherein the first insertion element (7) has an upper side (7a) ascending in a direction opposite to the direction of rotation (R) of the destacking screw (5), and wherein an upper side (8a) of the second insertion element (8) has an upward slope in a direction opposite to the direction of rotation (R) of the destacking screw (5).

2. The destacker according to claim 1, **characterized in that** both insertion elements (7, 8) are provided on the separating disk (6) such that they are integral therewith.

3. The destacker according to one of the preceding claims, **characterized in that** the second insertion element (8) horizontally projects farther from a vertical wall of the separating disk (6) than the first insertion element (7).

4. The destacker according to one of the preceding claims, **characterized in that** the first insertion element (7) has a first insertion depth (T1) of 1.5 mm to 3.5 mm and/or that the second insertion element (8) has a second insertion depth (T2) of 4 mm to 7.5 mm.

5. The destacker according to one of the preceding claims, **characterized in that** the upper side (8a) of the second insertion element (8) begins slightly below an upper end of the upper side (7a) of the first insertion element (7).

6. Method for operating a destacker (4) for trays (3), wherein the destacker (4) comprises a rack (40) for accommodating at least one stack of trays (9) and a plurality of destacking screws (5), each destacking screw (5) having a separating disk (6) and a helically configured spiral (10), wherein the separating disk (6) comprises a first insertion element (7) and a second insertion element (8), and
wherein the method comprises continuously rotating the destacking screws (5) in a direction of rotation (R), respectively, wherein the first insertion element (7) has an upper side (7a) ascending in a direction opposite to the direction of rotation (R) of the destacking screw (5), and wherein an upper side (8a) of the second insertion element (8) has an upward slope in a direction opposite to the direction of rotation (R) of the destacking screw (5), and
wherein the method comprises the following method steps:
- immersing of the destacking screw (5) during its rotation in the direction of rotation (R) with its first insertion element (7) into a gap (13) between a lowermost tray (3) to be destacked and a tray (3b) located above the lowermost tray,
- lifting the tray (3b) located above the lowermost tray with an upper side (7a) of the first insertion element (7) upon further rotation of the destacking screw (5),
- enlarging the gap (13) by lifting the tray (3b) located above the tray (3a) to be destacked,
- immersing of the second insertion element (8) into the enlarged gap (13) between the tray (3a) to be destacked and the tray (3b) located above the tray to be destacked,
- lowering the tray (3a) to be destacked on the helically configured spiral (10), while the tray (3b) located above the tray to be destacked remains held on the second insertion element (8).

7. Method according to claim 6, **characterized in that** the vertical dimension (A1) of the gap (13) is increased by at least 50% or at least 100% starting from an initial value.

8. Method according to claim 6 or 7, **characterized in that** the vertical dimension (A1) of the gap (13) is increased to 7 to 14 mm from an initial value in the region of 1,5 to 3 mm.

9. Method according to any one of claims 6 to 8, **characterized in that** the second insertion element (8) immerses into the gap (13) along a horizontal direction further than the first insertion element (7).

## Revendications

1. Dispositif de désempilage (4), comprenant un châssis (40) pour recevoir au moins une pile de coques (9) et comprenant plusieurs vis de désempilage (5) qui sont configurées pour être utilisées en continu dans une direction de rotation (R), dans lequel chaque vis de désempilage (5) présente un disque de séparation (6) et un filament (10) de forme hélicoïdale, dans lequel le disque de séparation (6) présente un premier élément de plongeon (7) et un second élément de plongeon (8), dans lequel le premier élément de plongeon (7) est configuré pour plonger dans un espace (13) entre deux coques voisines (3) lors de la rotation de la vis de désempilage (5), afin d'augmenter d'au moins 2 mm une distance (A1) entre les deux coques voisines (3), dans lequel le second élément de plongeon (8) est configuré pour plonger dans l'espace (13) agrandi au moyen du premier élément de plongeon (7), dans lequel le premier élément de plongeon (7) présente un côté supérieur (7a) montant dans la direction opposée à la direction de rotation (R) de la vis de désempilage (5), et dans lequel un côté supérieur (8a) du second élément de plongeon (8) présente une pente vers le haut opposée à la direction de rotation (R) de la vis de désempilage (5).

2. Dispositif d'empilage selon la revendication 1, **caractérisé en ce que** les deux éléments de plongeon (7, 8) sont prévus d'un seul tenant sur le disque de séparation (6).

3. Dispositif d'empilage selon l'une quelconque des revendications précédentes, **caractérisé en ce que** le second élément de plongeon (8) fait saillie horizontalement plus loin d'une paroi verticale du disque de séparation (6) que le premier élément de plongeon (7).

4. Dispositif d'empilage selon l'une quelconque des revendications précédentes, **caractérisé en ce que** le premier élément de plongeon (7) présente une première profondeur de plongeon (T1) de 1,5 mm à 3,5 mm et/ou **en ce que** le second élément de plongeon (8) présente une seconde profondeur de plongeon (T2) de 4 mm à 7,5 mm.

5. Dispositif d'empilage selon l'une quelconque des revendications précédentes, **caractérisé en ce que** le second élément de plongeon (8) commence par sa face supérieure (8a) légèrement au-dessous d'une extrémité supérieure de la face supérieure (7a) du premier élément de plongeon (7).

6. Procédé pour faire fonctionner un dispositif de désempilage (4) pour des coques (3), dans lequel le dispositif de désempilage (4) présente un châssis (40) pour recevoir au moins une pile de coques (9) ainsi que plusieurs vis de désempilage (5), dans lequel les vis de désempilage (5) présentent chacune un disque de séparation (6) et un filament (10) de forme hélicoïdale, dans lequel en outre le disque de séparation (6) présente un premier élément de plongeon (7) et un second élément de plongeon (8), et
dans lequel le procédé comprend la rotation continue des vis de désempilage (5) respectivement dans une direction de rotation (R), dans lequel le premier élément de plongeon (7) présente une face supérieure (7a) montant dans lune direction opposée à la direction de rotation (R) de la vis de désempilage (5), et dans lequel une face supérieure (8a) du second élément de plongeon (8) présente une pente vers le haut opposée à la direction de rotation (R) de la vis de désempilage (5), et
dans lequel le procédé comprend les étapes de procédé suivantes consistant à :
- plonger la vis de désempilage (5) pendant sa rotation dans la direction de rotation (R) avec le premier élément de plongeon (7) dans un espace (13) entre une coque située en dessous à désempiler (3) et une coque (3b) située au-dessus,
- soulever la coque (3b) située au-dessus au moyen de la face supérieure (7a) du premier élément de plongeon (7) lors de la rotation ultérieure de la vis de désempilage (5),
- augmenter l'espace (13) en soulevant la coque (3b) située au-dessus de la coque (3a) à désempiler,
- plonger dans l'espace élargi (13) entre la coque à désempiler (3a) et la coque située au-dessus (3b) au moyen du second élément de plongeon (8) et
- abaisser la coque (3a) à désempiler sur le filament (10) de forme hélicoïdale, tandis que la coque (3b) située au-dessus de la coque (3a) à désempiler est maintenue sur le second élément de plongeon (8).

7. Procédé selon la revendication 6, **caractérisé en ce que** la dimension verticale (A1) de l'espace (13) est augmentée d'au moins 50 % ou d'au moins 100 % à partir d'une valeur initiale.

8. Procédé selon l'une quelconque des revendications 6 ou 7, **caractérisé en ce que** la dimension verticale (A1) de l'espace (13) est augmentée à partir d'une valeur initiale dans la plage allant de 1,5 à 3 mm à 7 à 14 mm.

9. Procédé selon l'une quelconque des revendications 6 à 8, **caractérisé en ce que** le second élément de plongeon (8) plonge dans la direction horizontale plus loin dans l'espace (13) que le premier élément de plongeon (7).
